Europäisches Patentamt

European Patent Office

Office européen des brevets

(11) Publication number: **0 362 652**
**A2**

# EUROPEAN PATENT APPLICATION

(21) Application number: **89117640.6**

(51) Int. Cl.5: **B60R 22/20**

(22) Date of filing: **25.09.89**

(30) Priority: **05.10.88 JP 129928/88 U**

(43) Date of publication of application:
**11.04.90 Bulletin 90/15**

(84) Designated Contracting States:
**DE FR GB**

(71) Applicant: **Nippon Seiko Kabushiki Kaisha**
**6-3, Ohsaki 1-chome Shinagawa-ku**
**Tokyo 141(JP)**

(72) Inventor: **Tokugawa, Osamu**
**29-3, Shonandai 6-chome**
**Fujisawa Kanagawa(JP)**

(74) Representative: **Klingseisen, Franz, Dipl.-Ing.**
**et al**
**Dr. F. Zumstein Dipl.-Ing. F. Klingseisen**
**Bräuhausstrasse 4**
**D-8000 München 2(DE)**

(54) Adjustable anchor mounting device.

(57) An adjustable anchor mounting device has a base (1) to be fixedly mounted on a vehicle body, an adjustable anchor (2) provided selectively movably relative to the base and having an opening (2a) and an anchor nut (3) received in the opening (2a) for connecting a webbing to the adjustable anchor. The anchor nut has a flange portion (3b) and a crimp (3d), the crimp is located on the side of the webbing relative to the adjustable anchor, and a peripheral edge portion of the opening is firmly held between the flange portion and the crimp.

F I G . 1 (b)

EP 0 362 652 A2

## ADJUSTABLE ANCHOR MOUNTING DEVICE

### BACKGROUND OF THE INVENTION

1) Field of the Invention:

The present invention relates to an adjustable anchor mounting device which permits adjustment of the height of a shoulder webbing of a vehicle seat belt.

2) Description of the Related Art:

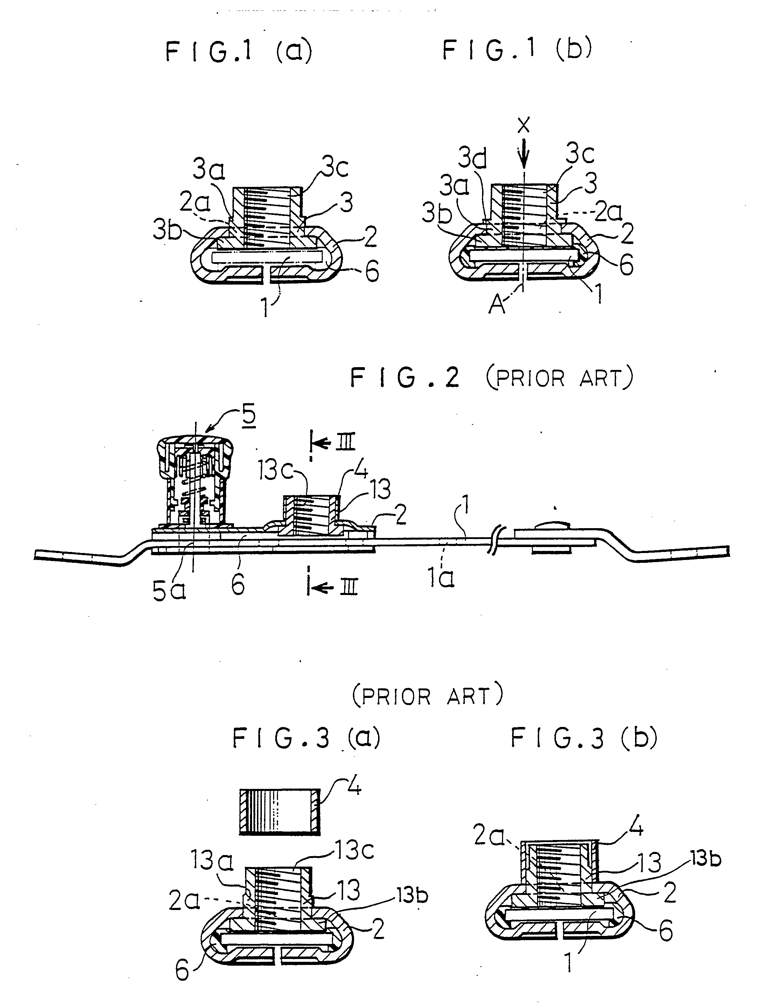

There have been proposed and used a variety of adjustable anchor mounting devices having a structure such that the height of the shoulder webbing of an associated vehicle seat belt system can be adjusted to allow a vehicle occupant to suitably adjust the position of the webbing. One example of such adjustable anchor mounting devices is illustrated in FIG. 2 and FIGS. 3(a) and 3(b). FIG. 2 shows the longitudinal cross-sectional shape of the exemplary conventional adjustable anchor mounting device. FIGS. 3(a) and 3(b) depict the transverse cross-sectional shape of the exemplary conventional adjustable anchor mounting device taken in the direction of arrows III-III of FIG. 2. The exemplary conventional adjustable anchor mounting device will hereinafter be described with reference to these drawings.

Numeral 1 indicates a strip-like base to be fixed on the side of an unillustrated vehicle body. The base 1 defines plural catch holes 1a arranged at predetermined intervals along the length of the base 1. Designated at numeral 2 is an adjustable anchor having a substantially C-like transverse cross-section. The adjustable anchor 2 encloses a portion of the base 1 therein and is movable along the length of the base 1. Interposed between the base 1 and the adjustable anchor 2 is a slider 6 made of a synthetic resin. Numeral 13 is a substantially cylindrical anchor nut which has an internal thread portion 13c. An unillustrated bolt, which serves to connect an webbing-carrying anchor member (not shown) to the adjustable anchor 2, is threadedly secured in the thread portion 13c. The anchor nut 13 has a large-diameter portion 13a which has been press-fitted into a hole 2a of the adjustable anchor 2 under prescribed fitting conditions, whereby the anchor nut 13 is fixed on the adjustable anchor 2. Numeral 5 indicates a control member. When manipulated as prescribed, an engaging portion 5a is selectively and releasably locked in one of the catch holes 1a of the base 1.

Accordingly, suitable manipulation of the control member 5 makes it possible to selectively shift the webbing-supporting point along the length of the base 1.

In the attachment structure for the anchor nut 13 of the adjustable anchor mounting device of the above-described construction, the anchor nut 13 is supported on the adjustable anchor 2 primarily by the frictional contact between the peripheral wall of the hole 2a and the corresponding peripheral wall of the large-diameter portion 13a. Accordingly, the attachment structure is accompanied by the potential problem that the adjustable anchor 2 may drop off by an impact such as accidental dropping in the course of the assembly of the adjustable anchor mounting device. Another potential problem has also surfaced that the impact under which the adjustable anchor 2 may slip out tend to vary from one device to another due to deviations in the shapes, dimensions, assembly and the like of the individual parts. Control of such deviations is however diifficult.

With a view toward overcoming such problems, some of the conventional adjustable anchor mounting devices makes use of a collar 4 as shown in FIG. 3(a). To enhance the securement of the anchor nut 13 on the adjustable anchor 2, the collar 4 is press-fitted on the large-diameter portion 13a of the adjustable nut 13 as depicted in FIG> 3(B). However, the use of such an additional and discrete part leads to an increase in the number of parts and hence to a cost-push.

In addition, pulling forces are generally applied from the unillustrated webbing to the anchor nut 13 in such directions that the anchor nut 13 tends to be twisted. To withstand such twisting forces, the flange portion 13b must be formed with substantial width and thickness. This has however led to an increase in both dimensions and weight.

### SUMMARY OF THE INVENTION

An object of the invention is to provide an adjustable anchor mounting device, which assures improved securement of the anchor nut 13 on the adjustable anchor 2 without need for extra parts both in the course of assembly and in use.

In one aspect of this invention, there is thus provided an adjustable anchor mounting device including a base to be fixedly mounted on a vehicle body, an adjustable anchor provided selectively movably relative to the base and having a receiving portion and an anchor nut attached to the receiving portion for connecting a webbing to the adjustable anchor. The anchor nut has a flange portion and a crimp, the crimp is located on the side of the webbing relative to the adjustable anchor, and at least a portion of an edge portion of the receiving portion is firmly held between the flange portion and the crimp.

In the above construction, the anchor nut is crimped directly on the adjustable anchor so that the anchor nut will not drop off from the adjustable anchor accidentally. The invention can therefore realize, without need for extra parts, an easy-assembly and high-reliability adjustable anchor mounting device which is free from accidental separation of the anchor nut both in the course of assembly and in use.

BRIEF DESCRIPTION OF THE DRAWINGS

The above and other objects, features and advantages of the invention will become apparent from the following description and the appended claims, taken in conjunction with the accompanying drawings, in which:

FIG. 1(a) is a transverse cross-section of an adjustable anchor mounting device according one embodiment of the invention, in which an anchor nut has been inserted through a hole of an adjustable anchor but has not been crimped on the adjustable anchor;

FIG. 1(b) is similar to FIG. 1(a) but the anchor nut has been crimped on the adjustable anchor;

FIG. 2 is a longitudinal cross-section of a conventional adjustable anchor mounting device;

FIG. 3(a) is a transverse cross-section of the conventional adjustable anchor mounting device taken in the direction of arrows III-III of FIG. 2 before a collar is fitted on an anchor nut; and

FIG. 3(b) is similar to FIG. 3(a) but the collar has been fitted on the anchor nut.

DETAILED DESCRIPTION OF THE INVENTION AND PREFERRED EMBODIMENT

The adjustable anchor mounting device according to the preferred embodiment of the invention will hereinafter be described with reference to FIGS. 1(a) and 1(b) which corespond to FIGS. 3(a) and 3(b) taken in the direction of arrows III-III of FIG. 2. In FIGS. 1(a) through 3(b), like parts are identified like reference numerals. The principal feature of the invention resides in the attachment structure between the anchor nut 3 and the adjustable anchor 2.

As seen from FIG. 1(a) which shows the sub-assembly of the adjustable anchor 2 and the anchor nut 3 inserted through the adjustable anchor 2, the anchor nut 3 has a symmetrical shape at least with respect to the drawing sheet before it is crimped on the adjustable anchor 2. The anchor nut 3 has a portion 3a inserted in the hole 2a of the adjustable anchor 2, which will be described subsequently, and a flange portion 3b. The inserted portion 3a has a size small enough to permit its insertion into the hole 2a of the adjustable anchor 2. The flange portion 3b has a diameter greater than the hole 2a. In order to complete the sub-assembly, the insert portion 3a is inserted into the hole 2a of the adjustable anchor 2 until the flange portion 3b is brought into contact with the adjustable anchor 2. An upper shoulder portion, as viewed in FIG. 1(a), of the insert portion 3a is thereafter pressed in a direction X of FIG. 1(b) by means of unillustrated pressing dies or the like, whereby a crimp 3d having an outer diameter greater than the inner diameter of the hole 2a of the adjustable anchor 2 is formed symmetrically at least · with respect to the drawing sheet. It should be borne in mind that at the time of the pressing work, the base 1 has not been inserted into the adjustable anchor 2 and the anchor nut 3 is supported by the lower one of the unillustrated pressing dies. In the present embodiment, the crimp 3d formed on an edge portion of the hole 2a is located on a side, in which an associated webbing is to be provided, relative to the adjustable anchor 2. By the pressing work, an inserted portion of the insert portion 3a other than the crimped upper shoulder portion, said inserted portion having substantially the same length as the thickness of the adjustable anchor 2, is formed between the crimp 3d and the flange portion 3b. As a result of the application of the pressing force in the direction X, the outer diameter of the inserted portion has expanded equal to the inner diameter of the hole 2a of the adjustable anchor 2 so that no clearance exists therebetween. As has been described above, the upper shoulder portion of the insert portion 3a of the anchor nut 3 has been crimped to hold an edge portion of the hole 2a of the adjustable anchor 2 between the flange portion 3b and the resultant crimp 3d. As a result, the anchor nut 3 has finally been secured and assembled on the adjustable anchor 2. Each load applied· to the anchor nut 3 is distributed to the flange 3b, the inserted portion of the insert portion 3a and the crimp 3d and can therefore be successfully borne there. Since the crimp 3d formed by the pressing work is located on the side - in which the associated webbing is to be provided - relative to the adjustable anchor 2, each pulling force transmitted to the anchor nut from the webbing can be fully borne by the flange 3b irrespective of the quality of the pressing work, i.e., the crimping so that the anchor nut 3 is held on the adjustable base 2 without failure.

The above-described embodiment may be modified to change the insert portion to a size such that the insert portion can be press-fitted into the hole 2a of the adjustable anchor 2 under prescribed conditions.

This structure in which the anchor nut 3 is first press-fitted and is then crimped in the subsequent step is not required to hold the anchor nut 3 by relying upon the press-fitting only but makes it possible to hold the anchor nut 3 by the combination of the press-fitting and crimping. The anchor nut 3 can therefore be held stably.

Further, the crimping can be achieved surely when the flange portion 3b and crimp 3d are each formed into a substantially symmetrical shape with respect to a central axis A and the adjustable anchor 2 is held between the entire peripheries thereof.

In addition, the material of the anchor nut as well as the dimensions of the insert portion, flange portion and crimp and the hole 2a can be determined suitably depending on the strength required. The structure of the adjustable anchor mounting device of the invention therefore has great designing freedom.

## Claims

1. An adjustable anchor mounting device including a base (1) to be fixedly mounted on a vehicle body, an adjustable anchor (2) provided selectively movably relative to the base and having a receiving portion (2a) and an anchor nut (3) attached to the receiving portion (2a) for connecting a webbing to the adjustable anchor, characterised in that the anchor nut has a flange portion (3b) and a crimp (3d), the crimp is located on the side of the webbing relative to the adjustable anchor, and at least a portion of an edge portion of the receiving portion is firmly held between the flange portion and the crimp.

2. The device of claim 1, wherein the receiving portion of the adjustable anchor is an opening (2a), the anchor nut is substantially cylindrical and has a portion (3a) partly inserted in the opening, and the flange portion and crimp have an outer diameter greater than the opening.

3. The device of claim 2, wherein the crimp (3d) has been formed by pressing an uninserted part (3a) of the portion partly inserted in the opening.

4. The device of claim 2, wherein the flange portion (3b) is provided over 360° around the periphery of the anchor nut.

5. The device of claim 2, wherein the crimp (3d) is provided over 360° around the periphery of the anchor nut.

FIG.1 (a)        FIG.1 (b)

FIG.2 (PRIOR ART)

(PRIOR ART)

FIG.3 (a)        FIG.3 (b)